Europäisches Patentamt

European Patent Office

Office européen des brevets

(19)

(11) **EP 0 436 424 B1**

(12) **FASCICULE DE BREVET EUROPEEN**

(45) Date de publication et mention
de la délivrance du brevet:
**11.09.1996 Bulletin 1996/37**

(51) Int Cl.⁶: **G11B 11/10**

(21) Numéro de dépôt: **90403696.9**

(22) Date de dépôt: **20.12.1990**

(54) **Tête de lecture magnéto-optique**

Magnetooptischer Lesekopf

Magnetooptical read head

(84) Etats contractants désignés:
**AT BE CH DE DK ES FR GB GR IT LI LU NL SE**

(30) Priorité: **28.12.1989 FR 8917313**

(43) Date de publication de la demande:
**10.07.1991 Bulletin 1991/28**

(73) Titulaire: **THOMSON multimedia
92400 Courbevoie (FR)**

(72) Inventeur: **Maurice, François
F-92045 Paris la Défense (FR)**

(74) Mandataire: **Thrierr, Françoise et al
THOMSON-CSF,
SCPI,
B.P. 329,
50, rue Jean-Pierre Timbaud
92402 Courbevoie Cédex (FR)**

(56) Documents cités:
**EP-A- 0 195 628          US-A- 4 654 837**

- **PATENT ABSTRACTS OF JAPAN vol. 12, no. 112
(P-687)(2959) 9 avril 1988, & JP-A- 62 241155**
- **PATENT ABSTRACTS OF JAPAN vol. 12, no. 34
(P-662)(2881) 2 février 1988, & JP-A-62 185267**

## Description

La présente invention se rapporte à une tête de lecture magnéto-optique, en particulier multipiste.

On sait que pour les têtes multipistes le produit du nombre de têtes élémentaires par la vitesse de la bande magnétique est sensiblement égal à une constante. Par conséquent, lorsque l'on veut lire un grand nombre de pistes, la vitesse relative tête/bande est faible, et si l'on voulait utiliser une tête multipiste inductive, son signal de sortie serait trop faible. Dans ce cas, on a recours à des têtes de lecture fonctionnant en mode actif, notamment des têtes de lecture magnéto-optiques.

Un type connu de têtes magnéto-optiques met en oeuvre l'effet Faraday. Cet effet consiste à magnétiser un matériau magnéto-optique, tel que du grenat, par le flux magnétique produit par la bande magnétique en déplacement, et à détecter cette magnétisation grâce au pouvoir rotatoire qu'elle a sur une lumière polarisée. Ces têtes connues ont une résolution limitée par la taille naturelle des domaines de la bande et par la taille du spot lumineux d'analyse, et d'autre part leur efficacité est faible et leur signal de sortie est fortement bruité.

On connaît d'après le document EP A 0195628 une tête de lecture-écriture à couche de lecture magnéto-optique, mais cette tête ne convient qu'à l'enregistrement perpendiculaire et nécessite une bande magnétique spéciale à couche supplémentaire de fermeture de champ magnétique. On connaît d'après le document US A 5654837 une tête de lecture magnéto-optique, mais cette tête a une structure massive très encombrante.

La présente invention a pour objet une tête de lecture, en particulier multipiste, de bande magnétique qui ait une bonne résolution, une bonne efficacité, dont le signal de sortie soit affecté le moins possible par du bruit, et qui soit facile et peu onéreuse à fabriquer.

La tête de lecture magnéto-optique conforme à l'invention est une tête pour lire une bande magnétique dont le circuit magnétique comporte une partie en matériau magnétique à forte perméabilité et une partie en matériau à propriétés magnéto-optiques, caractérisée en ce que le circuit magnétique est formé par un empilement de couches planes comprenant : une couche en matériau magnétique à forte perméabilité magnétique sur laquelle sont formées au moins une couche en matériau non magnétique et au moins une couche mince en matériau magnétique à effet Kerr éclairable par un faisceau laser. De préférence, la couche à effet Kerr présente une anisotropie magnétique, et son axe facile est dans le plan de cette couche et parallèle à la bande magnétique à lire. La tête de lecture de l'invention met en oeuvre la lecture d'enregistrements longitudinaux. L'épaisseur de la couche à effet Kerr est telle que le flux magnétique produit par la bande lue l'amène au voisinage de la saturation.

Un autre aspect de l'invention concerne une utilisation d'une tête magnétique. Cette utilisation est définie à la revendication 29.

La présente invention sera mieux comprise à la lecture de la description détaillée de plusieurs modes de réalisation, pris comme exemples non limitatifs et illustrés par le dessin annexé, sur lequel :

- la figure 1 est un schéma de principe d'une tête élémentaire faisant partie d'une tête de lecture conforme à l'invention,
- la figure 2 est un schéma d'un premier mode de réalisation de la tête de la figure 1,
- les figures 3A et 3B sont des vues de côté simplifiées d'un ensemble de plusieurs têtes élémentaires conformes à l'invention,
- la figure 4 est une vue de dessus de l'ensemble de têtes des figures 3A et 3B,
- la figure 5 est un schéma simplifié d'un dispositif opto-électronique de lecture utilisant une tête conforme à l'invention,
- les figures 6A à 6D sont différentes vues schématiques simplifiées de têtes élémentaires multicouches conformes à l'invention,
- les figures 7A et 7B sont des vues de côté simplifiées d'une tête de lecture conforme à l'invention avec son dispositif de guidage de faisceau optique de lecture.

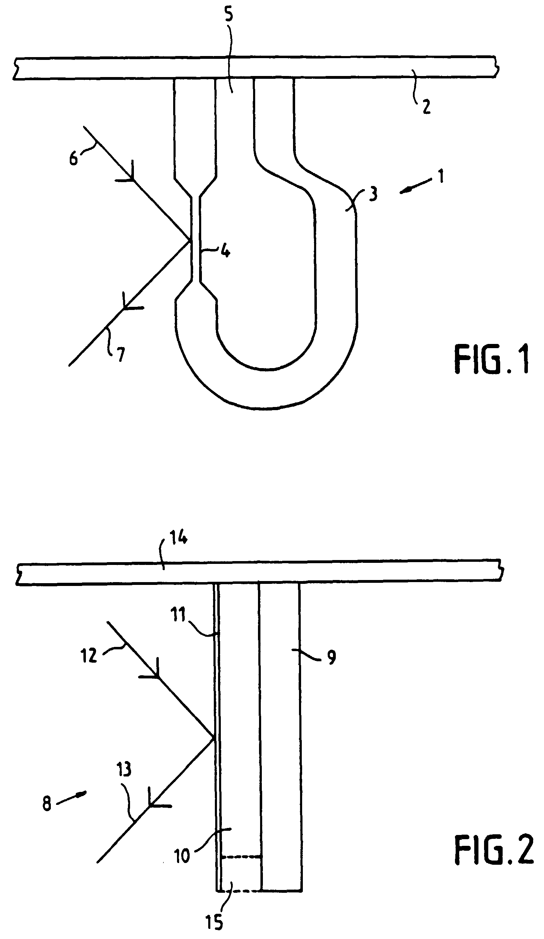

La tête élémentaire de lecture à haute résolution représentée schématiquement en figure 1, est destinée à lire une bande magnétique 2, enregistrée à l'aide d'une tête d'écriture multipiste de tout type approprié. La tête 1 comprend un circuit magnétique 3 en forme de boucle ouverte au niveau de la bande 2, à haute perméabilité dont une portion est constituée d'une couche magnétique très mince 4 constituant le transducteur à effet Kerr. Le circuit magnétique 3 est interrompu par un entrefer 5 étroit, non magnétique, au niveau de la bande 2. La couche 4 est éclairée par un faisceau optique oblique incident 6, dont le trajet peut être complexe, comme on le verra ci-dessous lors de la description de quelques exemples de réalisation. Le faisceau réfléchi par la couche 4 est référencé 7 et c'est lui qui recueille l'information correspondant aux variations de magnétisation de la couche 4 entraînées par des variations du flux magnétique produit par la bande 2.

Pour que la tête 1 puisse fonctionner correctement, il faut en particulier que:

- l'ensemble du circuit magnétique 3 ait une réluctance faible,
- que la couche 4 ait une très faible épaisseur, de façon à être magnétisée presque à saturation par le flux magnétique produit par la bande 2. De façon approximative, le rapport: épaisseur de la couche 4/épaisseur de la couche magnétisée de la bande 2 (1 000 à 10 000 Å environ) doit être sensiblement égal à l'inverse du rapport entre la magnétisation à saturation de la couche 4 et la magnétisation de la bande 2. Etant donné que ce rapport est typiquement de l'ordre de 5 à 10, la couche 4 a avantageusement une épaisseur comprise entre 100 et 2 000 Å environ. Cette couche 4 doit, bien entendu, avoir une très forte perméabilité magnétique pour ne pas diminuer la perméabilité de tout le circuit magnétique 3.

On a représenté en figure 2 le schéma simplifié d'un mode de réalisation d'une tête élémentaire faisant partie d'une tête multipiste conforme à l'invention, beaucoup plus facile à fabriquer que la tête de la figure 1. La tête élémentaire 8 de la figure 2 comporte une couche épaisse de matériau magnétique à forte perméance 9, d'une épaisseur pouvant atteindre plusieurs microns par exemple.

Sur la couche 9 sont formées une couche 10 de matériau non-magnétique, d'une épaisseur comprise, par exemple entre 500 et 30 000 Å, et typiquement de 3 000 Å environ, et une couche mince 11 de matériau magnétique formant la couche à effet Kerr. L'épaisseur de la couche 11 est par exemple comprise entre 100 et 2 000 Å environ. Un faisceau optique incident oblique 12 arrive sur la couche 11, qui réfléchit un faisceau 13. Les couches 9 à 11 sont polies sur un de leurs chants, par exemple perpendiculairement à leur surface principale, et la bande magnétique à lire 14 est appliquée sur la surface ainsi polie. Selon une variante représentée en trait interrompu, la couche 9 peut présenter à son extrémité opposée à celle sur laquelle est appliquée la bande 14 une surépaisseur 15 rejoignant la couche 13 et fermant ainsi le circuit magnétique de la tête 8 du côté de cette extrémité. Toutefois, cette surépaisseur 15 n'est pas absolument nécessaire au fonctionnement correct de la tête 8 du fait de la très faible épaisseur de la couche 10 par rapport aux dimensions des surfaces en regard des couches 9 et 11.

La tête de la figure 2 peut être facilement réalisée en une seule opération de dépôt de couches, et il n'est pas absolument nécessaire de graver les couches déposées, contrairement à ce que l'on devrait faire pour réaliser la tête de la figure 1.

Selon un mode de réalisation de la tête de la figure 2, les deux couches magnétiques 9 et 11 ont sensiblement la même épaisseur, à savoir une épaisseur comprise entre 100 et 2 000 Å environ. Une telle tête présente les avantages suivants:

- Etant donné que les deux couches magnétiques sont très minces, leur structure magnétique, peut être monodomaine, d'axe facile parallèle à la ligne de contact avec la bande à lire. Dans ce cas, la tête présente un avantage important: une structure monodomaine ne comporte, bien entendu, pas de parois de séparation de domaines et on élimine ainsi tout bruit lié à un déplacement de parois sous l'action d'un flux magnétique variable engendré par la bande à lire.
- Une couche magnétique épaisse produit un signal parasite, par effet de pôle fini, se traduisant par une sorte d'écho, qu'il faut éliminer à l'aide d'un filtre. Ce filtre doit avoir une longueur proportionnelle à l'épaisseur de la couche magnétique. On a donc tout avantage à réaliser une couche ultra-fine.
- Une structure symétrique (par rapport au plan central de la couche non-magnétique) présente l'avantage d'utiliser le même filtre d'égalisation pour les deux sens de défilement de la bande à lire.

Selon une caractéristique avantageuse de l'invention, on stabilise la structure monodomaine des deux couches minces en appliquant à la tête de lecture un champ magnétique permanent ayant la même direction que la ligne de contact tête/bande, c'est-à-dire de même sens que l'axe facile des deux couches magnétiques. Ce champ aura une valeur typique inférieure à 100 oersteds.

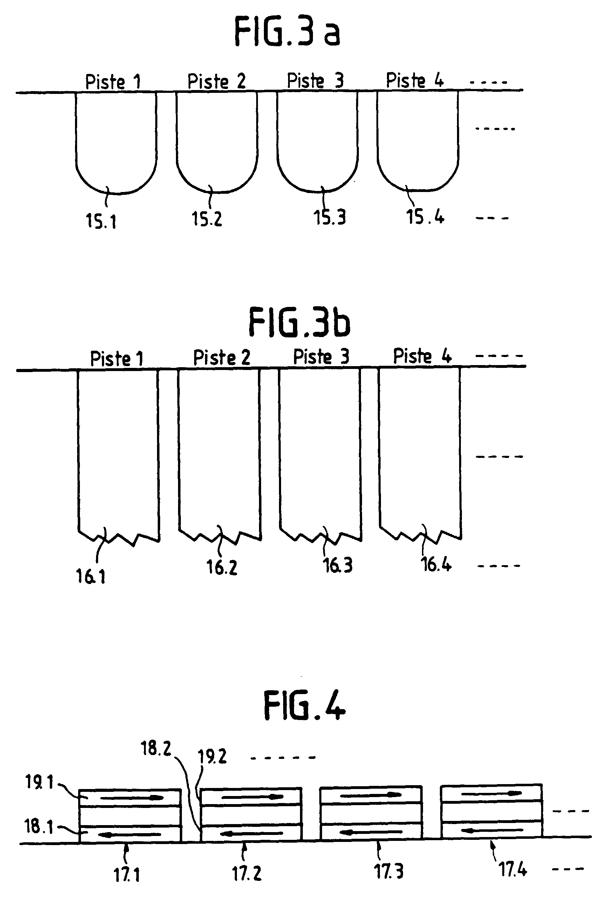

On a représenté sur les figures 3a et 3b des exemples de dessins de gravure des couches magnétiques permettant de réaliser sur une même structure (couche non magnétique et couches magnétiques) telle que celle de la figure 2 plusieurs têtes élémentaires disposées côte-à-côte pour lire une bande multipiste. Dans le cas de la figure 3a, les couches individuelles 15.1,15.2,... ont un contour en forme de "U", alors que dans le cas de la figure 3b, les couches individuelles 16.1,16.2,... ont une forme de bandes rectangulaires parallèles. Cette gravure peut n'affecter que la couche magnétique supérieure, ou l'empilement de trois couches. Elle n'est pas forcément nécessaire lorsque la largeur de piste est supérieure à quelques dizaines de microns. Elle présente un intérêt double:

- elle permet de limiter la diaphonie entre pistes adjacentes,
- elle permet de stabiliser la structure magnétique des pôles dont les magnétisations ont tendance à se coupler tête-bêche, dans un arrangement antiferromagnétique, comme on le voit sur la vue de la figure 4. Sur cette figure 4, les différentes têtes élémentaires successives sont référencées 17.1,17.2,... Les flèches tracées sur les faces frontales des couches magnétiques ultraminces en contact avec la bande magnétique à lire 18.1,18.2,... et 19.1,19.2,... représentent le sens de magnétisation de ces couches.

A priori, on peut dire que la structure de la figure 3a est plus stable que celle de la figure 3b du fait de sa longueur relativement courte (dans un sens perpendiculaire à la surface de la bande à lire). Si, dans la structure de la figure 3a, on allonge les pôles jusqu'à, dans le cas extrême, atteindre le cas de la figure 3b, la baisse du facteur démagnétisant dans un sens perpendiculaire à la ligne d'entrefer (perpendiculaire à la surface de la bande à lire) s'oppose à l'effet d'orientation du champ d'anisotropie, et la tête de lecture devient plus sensible, jusqu'à devenir instable le cas échéant.

La structure de la figure 3a est plus difficile à réaliser puisque le polissage de la tranche de la structure doit être contrôlé à quelques microns près en position absolue et en parallélisme. Par contre, la structure de la figure 3b peut être polie sur une machine automatique.

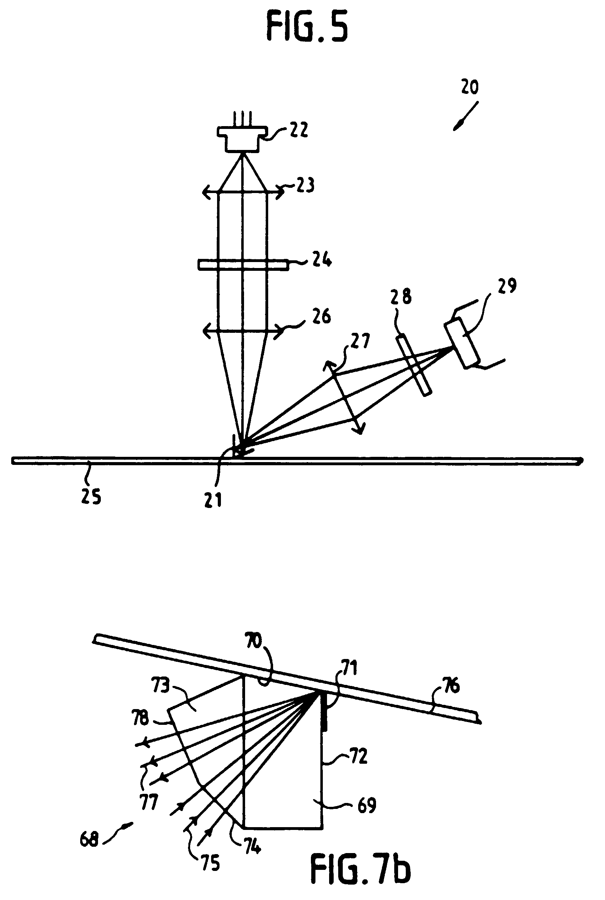

On a représenté en figure 5 un système 20 de lecture magnéto-optique multipiste comportant une tête de lecture conforme à l'invention. L'intérêt principal, pour la lecture d'un enregistrement multipiste, de l'utilisation d'une tête à effet Kerr est dû au principe de la lecture active dont les performances ne sont pas handicapées par une faible vitesse de défilement de la bande à lire, comme précisé ci-dessus en préambule. Le système 20 comporte en amont de la tête 21 à effet Kerr une source ponctuelle de lumière 22, de préférence une diode laser, un objectif de collimation 23, un dispositif 24 comprenant un polariseur si la source 22 n'est pas polarisée et une lame $\lambda/2$ servant à rendre la polarisation du faisceau lunineux la traversant perpendiculaire à la direction de défilement de la bande 25 à lire, et une lentille cylindrique 26 orientée de façon à focaliser le faisceau collimaté par l'objectif 23 selon une ligne perpendiculaire à la direction de défilement de la bande 25.

La tête 21 comprend, comme exposé dans la présente description, un capteur à effet Kerr et, le cas échéant, un réflecteur optique.

En aval de la tête 21, le système 20 comporte un dispositif optique 27 d'imagerie ayant typiquement un grandissement d'environ un; un dispositif 28 comprenant un analyseur et le cas échéant un compensateur de phase; et un capteur optique linéaire 29 dont la zone active est la conjuguée optique par le système optique, de la ligne éclairée sur la tête à effet Kerr. Ce capteur optique comporte par exemple une barrette CCD. Le grandissement de la partie aval du système 20 étant typiquement de l'ordre de l'unité, on peut avantageusement le réaliser en optique intégrée.

On va maintenant décrire des solutions permettant d'améliorer le facteur de mérite de la tête de lecture de l'invention. Le facteur de mérite est égal au produit de l'angle de rotation dû à l'effet Kerr par la racine carrée du facteur de réflexion dû également à l'effet Kerr. On peut montrer que dans le cas d'un système multipiste la principale source de bruit est le bruit Schottky, lié à la nature corpusculaire de la lumière. Le rapport signal/bruit du système de lecture est alors directement proportionnel au facteur de mérite défini ci-dessus, d'où l'importance de ce facteur de mérite.

Le facteur de mérite intrinsèque (mesuré dans l'air, sur une couche très épaisse) des matériaux magnétiques dépend de leur composition et de leur structure. Ces paramètres interviennent également dans le cas des couches minces. De façon avantageuse, les circuits magnétiques de la tête de l'invention sont réalisés en alliages à forte teneur en fer, tels que : fer pur, fer nitré et fer carboné, "Sendust" (Fe, Al, Si).

Pour améliorer le facteur de mérite, l'invention prévoit d'utiliser avantageusement des effets d'interférences optiques.

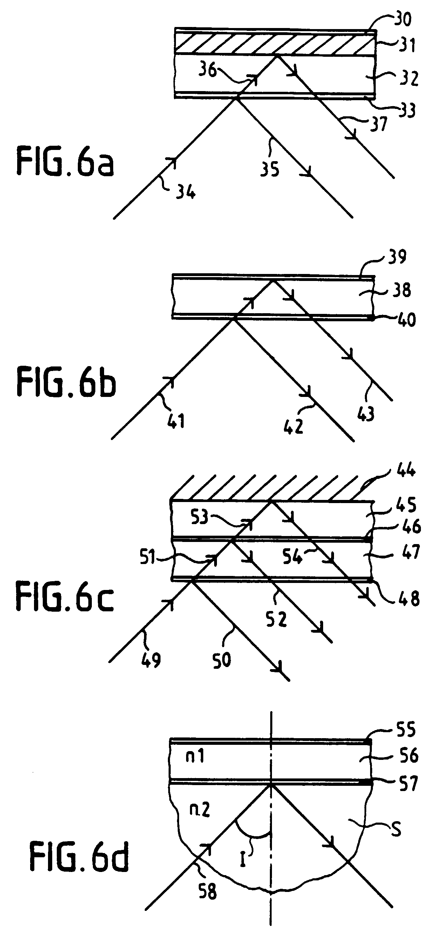

L'utilisation de structures tricouches est bien connue pour améliorer le facteur de mérite des disques magnéto-optiques. On a représenté en figure 6a une structure dérivée à quatre couches. Cette structure comprend dans l'ordre: :une couche magnétique 30, une couche métallique 31 réflectrice à la longueur d'onde utilisée, une couche 32 en matériau non magnétique, transparente à la longueur d'onde utilisée, et une couche magnétique mince 33 constituant la couche à effet Kerr. Le rayon optique incident 34, arrivant sur la couche 33, est partiellement réfléchi par celle-ci en un rayon 35, et partiellement traverse celle-ci (rayon 36) pour se réfléchir sur la couche 31 (rayon réfléchi 37) et re-traverser la couche 37. L'épaisseur de la couche 32 est choisie de façon que la différence de marche entre les rayons 35 et 37 soit égale à la moitié de la longueur d'onde du rayon 34. Etant donné qu'une réflexion sur une couche métallique apporte un déphasage aussi égal à la moitié de la longueur d'onde, on constate qu'il se forme des interférences "destructives" entre les composantes normalement réfléchies des rayons 35 et 37, et "constructives" entre les composantes magnéto-optiques de ces mêmes rayons 35 et 37. Il résulte de ces phénomènes un accroissement du facteur de mérite du capteur à effet Kerr.

On a représenté en figure 6b une structure tricouche différentielle. Cette structure comporte une couche 38 de matériau non magnétique, transparent à la longueur d'onde utilisée, d'un côté de laquelle on forme une première couche magnétique 39 et de l'autre côté de laquelle on forme une deuxième couche magnétique 40. Ces deux couches magnétiques présentent un effet Kerr. Par un choix judicieux de l'angle d'incidence du rayon incident 41 et de l'indice de réfraction de la couche diélectrique 38, on peut former cette couche 38 de façon que son épaisseur soit à la fois celle nécessaire pour l'entrefer de la structure du transducteur et pour un retard de marche des rayons lumineux de $\lambda/2$. Dans ce cas, la couche 39 peut jouer le rôle du réflecteur 31 de la figure 6a en plus de son rôle de couche à effet Kerr. Ainsi, outre l'effet d'interférences décrit ci-dessus pour la figure 6a, la structure de la figure 6b présente un effet de combinaisons d'effet Kerr. Les rayons réfléchis par les couches 40 et 39 sont respectivement référencés 42,43. La rotation par effet Kerr de la couche 39 se retranche de celle due à la couche 40. Il y a donc réjection de l'effet des magnétisations symétriques des deux couches magnétiques 39,40 (ce qu'on pourrait qualifier de fonctionnement de type monopôle), et addition des effets rotatoires des magnétisations opposées de ces deux courbes (fonctionnement de type dipôle).

On a représenté en figure 6c, une structure à cinq couches très minces à effet différentiel, combinant les caractéristiques et avantages des structures des figures 6a,6b. Cette structure de la figure 6c comprend, dans l'ordre: une couche métallique réfléchissante 44 (qui peut être épaisse), une première couche diélectrique 45, une première couche ultra-mince de matériau magnétique 46, une seconde couche diélectrique 47, et une seconde couche ultra-mince de matériau magnétique 48. Le rayon incident 49 est en partie réfléchi par la couche 48 (rayon 50) et en partie transmis par cette couche (rayon 51). Le rayon transmis 51 est, à son tour, partiellement réfléchi par la couche 46 (rayon 52) et partiellement transmis (rayon 53). Le rayon transmis 53 est réfléchi par la couche 44.

Dans cette structure de la figure 6c, les deux couches diélectriques 45,47 ont la même épaisseur, et produisent chacune un déphasage égal à la demi-longueur d'onde utilisée. La structure (46-47-48) fait interférer les rayons 50 et 52 de façon à exacerber l'effet Kerr produit par la couche 48, comme expliqué pour la figure 3a.

De même, la structure (44-45-46) fait interférer les rayons 52 et 54 de façon à optimiser la réponse de la deuxième couche Kerr 46, réponse qui est retranchée, comme sur la figure 3b, de celle de la première couche 48. On peut ainsi parvenir à une meilleure réjection de la réponse symétrique (monopôle).

On a représenté en figure 6d une structure tri-couche formée sur un substrat S transparent à la longueur d'onde utilisée : couche magnétique 55, couche diélectrique 56, couche magnétique 57. Si l'angle d'incidence I du rayon incident 58 et les indices de réfraction $n_1$ (couche 56) et $n_2$ (substrats) sont choisis de façon que :

$$n_2.\sin I = n_1$$

on obtient la conjugaison de deux effets : la réflexion totale à l'interface des couches 56-57, qui produit le même effet qu'une structure tri-couche optimisée, et d'autre part, la présence d'une onde évanescente se propageant dans la couche 57 produit une rotation par effet Faraday qui vient s'ajouter à la rotation par effet Kerr, ce qui augmente corrélativement le facteur de mérite de la structure.

Dans toutes les structures décrites ci-dessus, on peut ajouter une couche diélectrique supplémentaire d'adaptation d'indice entre la première couche magnétique (celle à effet Kerr) et le substrat. Une telle couche supplémentaire, lorsque son indice de réfraction est judicieusement choisi, joue un rôle d'antireflet à l'interface substrat-couche Kerr, ce qui permet de faire interagir plus efficacement l'énergie lumineuse incidente avec les couches magnéto-optiques.

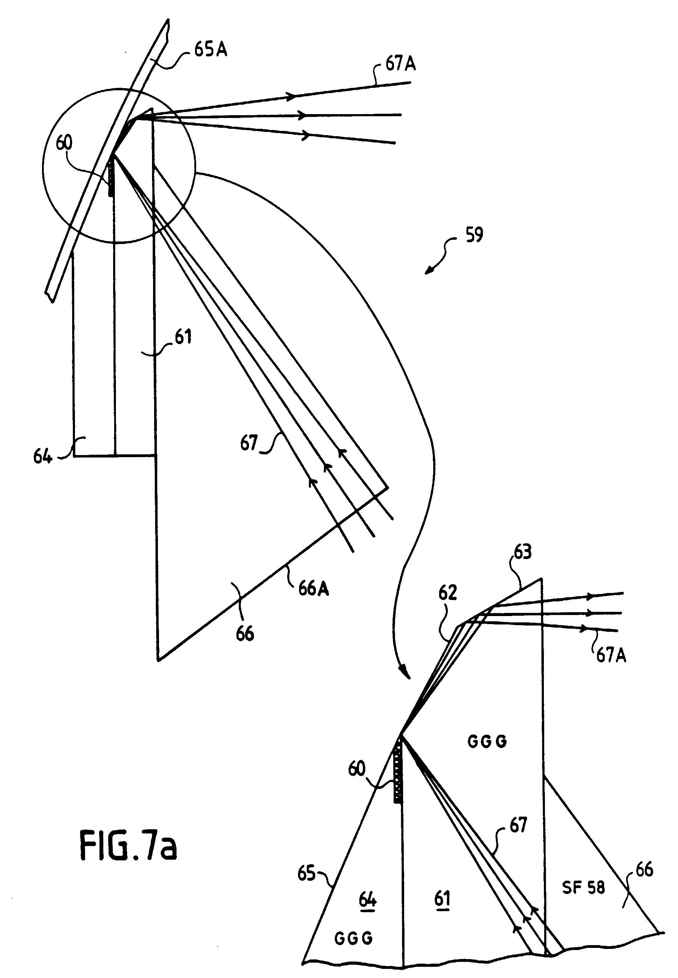

Pour pouvoir utiliser dans des conditions optimales la structure magnéto-optique décrite ci-dessus, il faut également résoudre les problèmes de contact avec la bande, et de cheminements optiques. On décrit ci-dessous, en référence aux figures 7a à 11 des modes de réalisation, conformes à l'invention, de têtes magnétiques et de couches diélectriques (vues selon le même axe que les structures des figures 2 ou 6a à 6d) pour la lecture de bandes multipistes (les couches magnétiques étant par exemple gravées comme indiqué en figure 3a ou 3b). Cette structure de transducteur sera simplement appelée structure Kerr et sera simplement représentée sous forme d'un rectangle. C'est aussi la structure référencée 21 en figure 5.

On a représenté en figure 7a une tête magnéto-optique simplifiée 59, sans réflecteur. La structure Kerr 60 est réalisée sur un bloc 61 de matériau non magnétique transparent à la longueur d'onde utilisée. Le bloc 61 a la forme d'un parallélépipède tronqué à l'une de ses extrémités frontales (l'extrémité antérieure se trouvant du côté de la bande à lire, à proximité de la structure 60) perpendiculairement à ses faces latérales étroites (c'est-à-dire perpendiculairement au plan du dessin) selon deux plans faisant entre eux un angle obtus d'environ 135°. On obtient ainsi à cette extrémité frontale deux faces planes 62,63 faisant entre elles cet angle d'environ 135°. On colle sur la grande face du bloc 61 portant la structure 60 un autre bloc 64, réalisé avec le même matériau que celui du bloc 61. La face antérieure 65 du bloc 64 est coupée en biais, dans le prolongement de la face 62, et ces deux faces sont polies pour former une surface sensiblement cylindrique sur laquelle passera la bande à lire 65A. On colle sur l'autre grande face 61 un prisme 66 de guidage de rayons optiques. Le prisme 66 est tel que les rayons incidents 67, entrant par sa face 66A, arrivent directement sur la structure 60, s'y réfléchissent, longent la face 62 en s'y écartant légèrement, se réfléchissent totalement sur la face 63 et sortent du bloc 61 (rayons émergents 67A). Etant donné que la bande 65A n'entre pas en contact avec la face 63, il n'y a pas de danger d'usure de cette dernière. La réflexion sur cette face 63 sera donc toujours totale.

L'intérêt de la tête 59 est, outre sa simplicité, qu'une usure éventuelle due à la bande 65A est sans incidence optique, car le rayon optique 67 ne se réfléchit pas sur la face 62, mais sur la structure 60 et la face 63. Cependant, cette tête ne présente pas une sensibilité maximale à cause du faible angle (typiquement inférieur à 45°) que fait la bande 65A par rapport à la structure 60.

On a représenté en figure 7b une tête 68 à réflexion totale vitreuse sur la face polie du bloc optique en contact avec la bande à lire.

La tête 68 comporte un premier bloc optique 69 sensiblement en forme de parallélépipède rectangle dont une face frontale 70 est légèrement oblique. La structure Kerr 71 est déposée sur la face 72 du bloc 69, le long de l'arête commune aux faces 70,72, la face 70 faisant avec la face 72 un angle légèrement supérieur à 90° et choisi de façon à séparer les faisceaux entrée et sortie. On fixe sur la face du bloc 69 opposée à la face 72 un bloc 73 en forme de prisme irrégulier. Le bloc 73 comporte une face d'entrée 74 par laquelle pénètre le rayon incident 75. Ce rayon 75 arrive sur la structure 71 près de son extrémité en contact avec la bande à lire 76 (qui est appliquée sur la face 70), se réfléchit sur cette structure en direction de la face 70 sur laquelle il subit une réflexion vitreuse totale. Le rayon 77 réfléchi par la face 70 traverse les blocs 69 et 73 et sort de ce dernier par sa face 78. L'angle entre les rayons 75 et 77 est égal au double de l'excès à 90° de de l'angle entre les faces 70 et 72. L'angle entre les faces 74 et 78 est fonction de cet angle entre les faisceaux 75 et 77.

La structure de la tête 68 a une meilleure résolution que celle de la tête 59, car l'angle typique entre la face 70 et la normale à la face 72 est typiquement inférieur à 30°. Pour que cette structure fonctionne correctement, il faut que la bande 76 ne soit pas en trop bon contact avec la face 70 polie, pour éviter de supprimer la réflexion vitreuse sur cette face.

Dans la tête 68 décrite ci-dessus, la structure Kerr 71 est apparente et non protégée. Elle est donc vulnérable. Pour la protéger, on peut avantageusement contre-coller du côté de cette structure une contre-pièce ayant une épaisseur voisine de celle du bloc portant cette structure, avant de couper et de polir la face qui sera en contact avec la bande à lire.

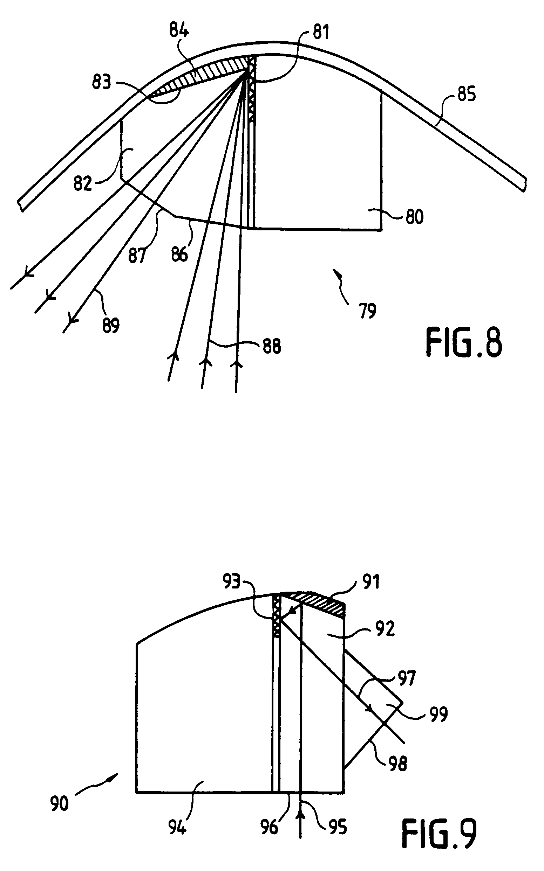

On a représenté en figure 8, le schéma d'une tête 79 à réflecteur métallique intégré. La tête 79 comporte un bloc-substrat 80 sur lequel est réalisée une structure Kerr 81 et sur lequel est rapportée une contre-pièce 82 transparente à la longueur d'onde utilisée. La face du bloc 82 qui est destinée à se trouver du côté de la bande à lire est polie. On forme sur la surface plane 83 ainsi polie une couche métallique réfléchissante 84, puis on colle ensemble les blocs 80,82 en les alignant de façon que la couche 84 soit bien tangente au bord de la structure 81. On polit alors de façon sensiblement cylindrique les surfaces sur lesquelles sera appliquée la bande à lire 85. L'épaisseur restante de la couche 84 à proximité de la structure 81 est au moins suffisante pour assurer une bonne réflexion de la lumière.

La partie arrière du bloc 82 est coupée et polie de façon à présenter deux surfaces planes 86,87 faisant entre elles un angle obtus et servant respectivement de faces d'entrée et de sortie du rayon lumineux incident 88 et émergent 89. Le rayon incident 88 se réfléchit sur le réflecteur 84, puis sur la structure 81.

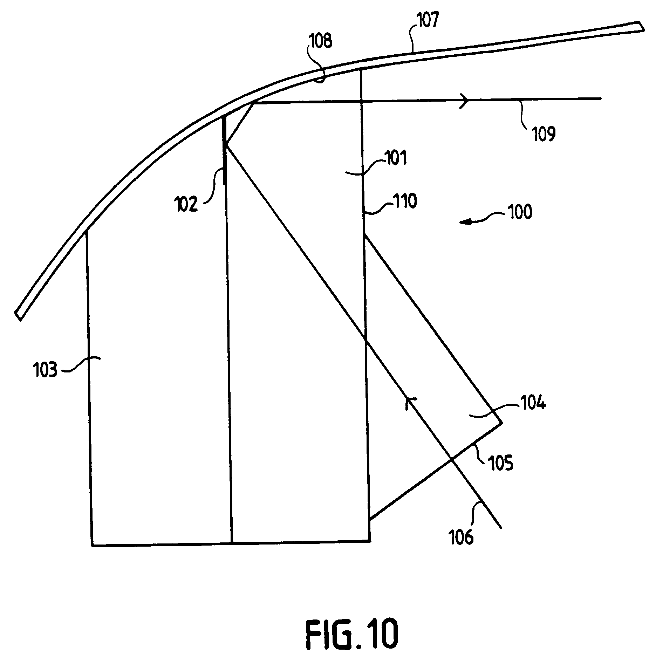

La tête 90 de la figure 9 est une variante de la tête 79 de la figure 8. Le réflecteur métallique 91 est formé sur le substrat 92 portant la structure Kerr 93, au lieu d'être formé sur la contre-pièce 94.

Le rayon incident 95 arrive presque perpendiculairement à la face d'entrée 96 du substrat 92, se réfléchit sur la couche 91, puis sur la structure 93. Le rayon émergent 97 sort de la tête en traversant un bloc prismatique 98 dont la face de sortie 99 est sensiblement perpendiculaire au rayon 97.

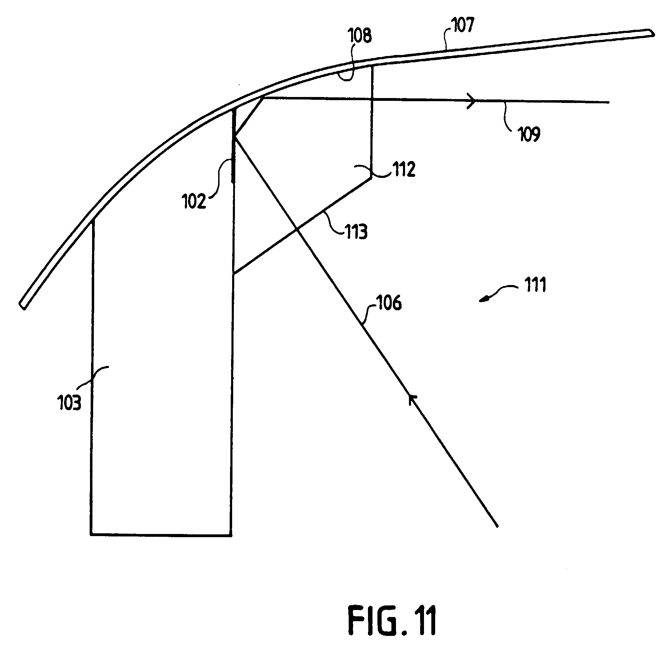

On a représenté en figures 10 et 11 des modes de réalisation faisant appel à des matériaux à fort indice de réfraction: supérieur à 1,5 et typiquement voisin de 2. Ainsi, même si la bande à lire est en contact intime avec la surface de réflexion des blocs optiques, elle ne peut perturber la réflexion totale, car l'indice de réfraction des liants utilisés pour la fabrication de la bande est au plus de 1,5.

La tête 100 de la figure 10 comporte un substrat 101 supportant à l'extrémité d'une de ses grandes faces une structure Kerr 102. Une contrepièce 103 collée contre le substrat et la structure protège cette dernière. Sur l'autre grande face du substrat 101 est collé un prisme d'entrée 104 à section triangulaire dont la face d'entrée 105 fait par rapport à la surface de la structure 102 un angle égal à l'angle d'incidence que doit faire le rayon incident 106 avec cette structure, le rayon 106 étant envoyé perpendiculairement à la surface 105. Cet angle est avantageusement compris entre 30 et 60° environ. Les surfaces frontales des blocs 101 et 102 destinées à entrer en contact avec la bande à lire 107 sont conformées en surface 108 sensiblement cylindrique. Le rayon incident 106 se réfléchit d'abord sur la structure Kerr 102; puis sur la face 108 (sur laquelle il arrive avec un angle d'incidence supérieur à l'angle limite de réflexion totale) et le rayon émergent 109 sort du bloc 101 perpendiculairement à sa grande face 110 (opposée à celle portant la structure 102). Bien entendu, la forme de la surface 108 est déterminée pour permettre ce trajet du rayon lumineux. Si le rayon 109 est perpendiculaire à la face 110, on évite d'avoir à repolir celle-ci.

On peut avantageusement réaliser la tête 100 de la façon suivante:

1/ dépôt de la structure 102 sur un substrat (101) d'indice élevé, par exemple en verre SF58, en zircone ou en GGG. De préférence, la structure 102 est réalisée comme la structure de la figure 6d, le matériau d'entrefer (couche 56 sur la figure 6d) ayant un indice de réfraction le plus faible possible, de façon à obtenir une réflexion totale à l'interface entre la couche magnétique (couche 57, figure 6d) et l'entrefer. Ce matériau d'entrefer est avantageusement de la silice (indice voisin de 1,5) ou du $MgF_2$ (indice de 1,38).

2/ Gravure de la structure (55 à 57 sur la figure 6d) pour individualiser les têtes (par exemple comme indiqué en figure 3a ou 3b).

3/ Collage de la contrepièce 103. La contrepièce est réalisée de préférence avec le même matériau que celui du substrat 101. La colle utilisée a, de préférence, la même dureté que le substrat 101.

4/ Sciage de l'empilage 101-102-103 et ébauche à la meule de la surface 108.

5/ Finition à la bande abrasive de la surface 108, qui doit avoir une qualité de poli optique.

6/ Collage du prisme 104.

On a représenté en figure 11 une variante de réalisation de la tête 100 de la figure 10. Sur cette figure 11, les éléments similaires à ceux de la figure 10 sont affectés des mêmes références numériques.

La tête 111 de la figure 11 diffère de la tête 100 en ce que le bloc 112 est coupé de façon que sa face 113 d'entrée de rayon incident opposée à la face frontale arrondie (définissant avec la face frontale du bloc 102 la surface 108) soit perpendiculaire au rayon incident 106, le trajet des rayons 106 et 109 restant le même dans les deux cas. On supprime ainsi le bloc prismatique 104.

La tête 100 ou 111 présente ainsi une structure qui n'est pratiquement pas affectée par l'usure due à la bande à lire. Elle peut donc convenir à des systèmes à très haut débit de données à lire, à vitesse de déplacement de bande importante.

## Revendications

1. Tête de lecture magnéto-optique dont le circuit magnétique comporte une partie en matériau magnétique à forte perméabilité et une partie en matériau à propriétés magnéto-optiques, caractérisée en ce que le circuit magnétique est formé par un empilement de couches planes comprenant : une couche en matériau magnétique à forte perméabilité magnétique (9, 30, 39, 46) sur laquelle sont formées au moins une couche en matériau non magnétique (10, 32, 38, 45 et 47, 56) et au moins une couche mince en matériau magnétique à effet Kerr (11, 33, 39, 40, 46, 48, 57) éclairable par un faisceau laser.

2. Tête de lecture selon la revendication 1, caractérisée par le fait que la couche à effet Kerr a un axe facile d'aimantation dans le plan de cette couche et parallèle à une bande magnétique à lire.

3. Tête de lecture selon la revendication 1 ou 2, caractérisée par le fait qu'elle effectue la lecture d'enregistrements longitudinaux.

4. Tête de lecture selon l'une des revendications précédentes, caractérisée par le fait que l'épaisseur de la couche à effet Kerr est telle que le flux magnétique produit par la bande lue l'amène au voisinage de la saturation.

5. Tête de lecture selon la revendication 4, caractérisée par le fait que l'épaisseur de la couche à effet Kerr est comprise entre 100 et 2 000 Å environ.

6. Tête de lecture selon l'une des revendications précédentes, caractérisée par le fait que l'épaisseur de la couche en matériau non magnétique est comprise entre 500 et 30 000 Å environ.

7. Tête de lecture selon l'une des revendications précédentes, caractérisée par le fait que l'on grave les couches de matériau magnétique sont gravées pour délimiter chaque tête élémentaire (figures 3a, 3b) parmi d'autres têtes élémentaires formant une même tête multipiste.

8. Tête de lecture selon l'une des revendications précédentes, caractérisée par le fait qu'on lui applique un champ magnétique permanent ayant la même direction que la ligne de contact tête/bande.

9. Tête de lecture selon l'une des revendications précédentes, caractérisée en ce que la partie de l'empilement de couches planes agissant comme transducteur magnéto-optique comprend les couches suivantes disposées les unes sur les autres dans l'ordre suivant :

   a) la couche en matériau magnétique à forte perméabilité magnétique (30),
   b) un réflecteur métallique (31),
   c) une couche en matériau non magnétique transparent (32),
   d) une couche mince en matériau magnétique à effet Kerr (33).

10. Tête de lecture selon l'une des revendications 1 à 8, caractérisée en ce que la partie de l'empilement de couches planes agissant comme transducteur magnéto-optique comprend deux couches minces en matériau magnétique à effet Kerr (39, 40) séparées par une couche en matériau non magnétique transparent (38).

11. Tête de lecture selon l'une des revendications 1 à 8, caractérisée en ce que la partie de l'empilement de couches planes agissant comme transducteur magnéto-optique comprend une première couche en matériau non magnétique transparent (45) disposée entre un réflecteur (44) et une première couche mince en matériau magnétique à effet Kerr (46), et une deuxième couche en matériau non magnétique transparent (47) disposée entre la première couche magnétique mince à effet Kerr (46) et une deuxième couche mince en matériau magnétique à effet Kerr (48).

12. Tête de lecture selon l'une des revendications 1 à 8, caractérisée en ce que la partie de l'empilement de couches planes agissant comme transducteur magnéto-optique comprend une couche mince en matériau magnétique à effet Kerr (57) disposée entre une première couche en matériau non magnétique transparent (56) ayant un premier indice de réfraction (ni) et un substrat (S) en matériau non magnétique transparent ayant un deuxième indice de réfraction (n2) supérieur au premier indice de réfraction (n1).

13. Tête de lecture selon l'une des revendications 1 à 11, caractérisée par le fait que le transducteur (60,71,81,93,102) est formé sur un bloc substrat (61, 69, 80, 92, 101, 112) en matériau transparent à la longueur d'onde utilisée.

14. Tête de lecture selon l'une des revendications 12 ou 13, caractérisée par le fait qu'elle comporte une couche diélectrique supplémentaire d'adaptation d'indice entre la première couche magnétique et le substrat.

15. Tête de lecture selon la revendication 14, caractérisée par le fait que l'on colle sur le bloc substrat un bloc de guidage de rayon lumineux (66,98,73,104), également transparent à la longueur d'onde utilisée.

16. Tête de lecture selon la revendication 14 ou 15, caractérisée par le fait que l'on colle sur le bloc substrat une contrepièce de protection du transducteur (64,82,94,103).

17. Tête de lecture selon la revendication 16, caractérisée par le fait que la contrepièce est en matériau transparent à la longueur d'onde utilisée et sert au guidage du rayon lumineux incident et/ou réfléchi.

18. Tête de lecture selon l'une des revendications 14 à 17, caractérisée par le fait que l'on forme sur la contrepièce une couche réflectrice (84) en contact avec la bande à lire (85).

19. Tête de lecture selon l'une des revendications 14 à 17, caractérisée par le fait que l'on forme sur le substrat une couche réflectrice (91) en contact avec la bande à lire.

20. Tête de lecture selon l'une des revendications 14 à 19, caractérisée par le fait que la surface de contact d'au moins le bloc substrat avec la bande à lire est arrondie (figures 8 à 11 et figure 7a).

21. Tête de lecture selon l'une des revendications 14 à 20, caractérisée par le fait qu'au moins le bloc substrat est un matériau à indice de réfraction plus élevé que celui de la couche magnétique de la bande à lire.

22. Tête de lecture selon la revendication 21, caractérisée ledit indice est d'au moins 1,5.

23. Tête de lecture selon l'une des revendications précédentes, caractérisée par le fait qu'elle comporte une source lumineuse (22), une première optique (23 à 26) focalisant une raie lumineuse sur un transducteur (21), et une seconde optique (27,28) focalisant la raie réfléchie par le transducteur sur un capteur optoélectronique (29).

24. Tête de lecture selon la revendication 23, caractérisée par le fait que la première optique comporte une lentille de collimation (23), un polariseur et une lame demi-longueur d'onde (22) et une lentille cylindrique (26).

25. Tête de lecture selon la revendication 23 ou 24, caractérisée par le fait que la seconde optique comporte une lentille de focalisation (27), un dispositif de compensation de phase, et un analyseur (28).

26. Tête de lecture selon l'une des revendications précédentes, caractérisée en ce que la couche magnéto-optique (60, 71, 81, 93, 102) est oblique par rapport à la surface de la bande magnétique à lire (65A, 76, 85, 107), dans leur zone de contact.

27. Tête de lecture multipiste caractérisée en ce qu'elle comporte plusieurs têtes élémentaires (15.1, 15.2, ... ou 16.1, 16.2, ou 17.1, 17.2, ...) selon l'une des revendications précédentes, pour lire une bande magnétique à enregistrement multipiste.

28. Tête de lecture multipiste caractérisée en ce qu'elle comporte plusieurs têtes élémentaires (15.1, 15.2, ... ou 16.1, 16.2, ... ou 17.1, 17.2, ...) selon la revendication 1, et en ce que la couche mince en matériau magnétique à effet Kerr commune à toutes les têtes élémentaires ou l'empilement des trois couches communes à toutes les têtes élémentaires n'ont pas subi de gravure délimitant les têtes élémentaires.

29. Utilisation d'une tête magnétique selon la revendication 28 pour lire une bande magnétique multipiste, caractérisé en ce que la largeur de chaque piste est supérieure à quelques dizaines de micromètres.

**Patentansprüche**

1. Magneto-optischer Lesekopf, dessen Magnetkreis einen Teil aus magnetischem Material mit hoher Permeabilität und einen Teil aus einem Material mit magneto-optischen Eigenschaften enthält, dadurch gekennzeichnet, daß der Magnetkreis durch einen Stapel aus ebenen Schichten gebildet ist, der eine Schicht (11, 30, 39, 46) aus einem magnetischen Material mit hoher magnetischer Permeabilität enthält, auf der wenigstens eine Schicht (10, 32, 38, 45 und 47, 56) aus nichtmagnetischem Material und wenigstens eine dünne Schicht (11, 33, 39, 40, 46, 48, 57) aus magnetischem Material mit Kerr-Effekt, die durch ein Laser-Bündel beleuchtbar ist, gebildet sind.

2. Lesekopf nach Anspruch 1, dadurch gekennzeichnet, daß die Schicht mit Kerr-Effekt eine Achse leichter Magnetisierung in der Ebene dieser Schicht und parallel zu einem zu lesenden Magnetband hat.

3. Lesekopf nach Anspruch 1 oder 2, dadurch gekennzeichnet, daß er das Lesen von Längsaufzeichnungen bewirkt.

4. Lesekopf nach einem der vorhergehenden Ansprüche, dadurch gekennzeichnet, daß die Schicht mit Kerr-Effekt eine solche Dicke hat, daß der von dem gelesenen Band erzeugte Magnetfluß sie in die Nähe der Sättigung bringt.

5. Lesekopf nach Anspruch 4, dadurch gekennzeichnet, daß die Dicke der Schicht mit Kerr-Effekt zwischen etwa 100 und 2.000 Å enthalten ist.

6. Lesekopf nach einem der vorhergehenden Ansprüche, dadurch gekennzeichnet, daß die Dicke der Schicht aus nichtmagnetischem Material zwischen etwa 500 und 30.000 Å enthalten ist.

7. Lesekopf nach einem der vorhergehenden Ansprüche, dadurch gekennzeichnet, daß die Schichten aus magnetischem Material geätzt sind, um jeden Elementarkopf (Figuren 3a, 3b) gegenüber anderen Elementarköpfen, die denselben Mehrspurkopf bilden, abzugrenzen.

8. Lesekopf nach einem der vorhergehenden Ansprüche, dadurch gekennzeichnet, daß an ihn ein permanentes Magnetfeld angelegt wird, das die gleiche Richtung wie die Kopf-Band-Berührungslinie hat.

9. Lesekopf nach einem der vorhergehenden Ansprüche, dadurch gekennzeichnet, daß der Teil des Stapels aus ebenen Schichten, der als magneto-optischer Wandler wirkt, die folgenden Schichten enthält, die in der folgenden Reihenfolge übereinander angeordnet sind:

   a) die Schicht (30) aus magnetischem Material mit hoher magnetischer Permeabilität,
   b) einen metallischen Reflektor (31),
   c) eine Schicht (32) aus transparentem nichtmagnetischem Material,
   d) eine dünne Schicht (33) aus magnetischem Material mit Kerr-Effekt.

10. Lesekopf nach einem der Ansprüche 1 bis 8, dadurch gekennzeichnet, daß der Teil des Stapels aus ebenen Schichten, der als magneto-optischer Wandler wirkt, zwei dünne Schichten (39, 40) aus magnetischem Material mit Kerr-Effekt enthält, die durch eine Schicht (38) aus transparentem nichtmagnetischen Material getrennt sind.

11. Lesekopf nach einem der Ansprüche 1 bis 8, dadurch gekennzeichnet, daß der Teil des Stapels aus ebenen Schichten, der als magneto-optischer Wandler wirkt, eine erste Schicht (45) aus transparentem nichtmagnetischem Material enthält, die zwischen einem Reflektor (44) und einer ersten dünnen Schicht (46) aus magnetischem Material mit Kerr-Effekt angeordnet ist, sowie eine zweite Schicht (47) aus transparentem nichtmagnetischem Material, die zwischen der ersten dünnen magnetischen Schicht (46) mit Kerr-Effekt und einer zweiten dünnen Schicht (48) aus magnetischem Material mit Kerr-Effekt angeordnet ist.

12. Lesekopf nach einem der Ansprüche 1 bis 8, dadurch gekennzeichnet, daß der Teil des Stapels aus ebenen Schichten, der als magneto-optischer Wandler wirkt, eine dünne Schicht (57) aus magnetischem Material mit Kerr-Effekt enthält, die zwischen einer ersten Schicht (46) aus transparentem nichtmagnetischem Material, das einen ersten Brechungsindex ($n1$) hat, und einem Substrat (S) aus transparentem nichtmagnetischem Material, das einen zweiten Brechungsindex ($n2$) hat, der größer als der erste Brechungsindex ($n1$) ist, angeordnet ist.

13. Lesekopf nach einem der Ansprüche 1 bis 11, dadurch gekennzeichnet, daß der Wandler (60, 71, 81, 93, 102) auf einem Substratblock (61, 69, 80, 92, 101, 112) aus einem Material, das für die verwendete Wellenlänge transparent ist, gebildet ist.

14. Lesekopf nach einem der Ansprüche 12 oder 13, dadurch gekennzeichnet, daß er eine zusätzliche dielektrische Indexanpassungsschicht zwischen der ersten magnetischen Schicht und dem Substrat enthält.

15. Lesekopf nach Anspruch 14, dadurch gekennzeichnet, daß auf den Substratblock ein Lichtstrahlführungsblock (66, 98, 73, 104) geklebt ist, der ebenfalls für die verwendete Wellenlänge transparent ist.

16. Lesekopf nach Anspruch 14 oder 15, dadurch gekennzeichnet, daß auf den Substratblock ein Wandlerschutzgegenstück (64, 82, 94, 103) geklebt ist.

17. Lesekopf nach Anspruch 16, dadurch gekennzeichnet, daß das Gegenstück aus einem Material besteht, das für die verwendete Wellenlänge transparent ist und zur Führung des einfallenden und/oder reflektierten Lichtstrahls dient.

18. Lesekopf nach einem der Ansprüche 14 bis 17, dadurch gekennzeichnet, daß auf dem Gegenstück eine reflektierende Schicht (84) gebildet ist, die mit dem zu lesenden Band (85) in Berührung steht.

19. Lesekopf nach einem der Ansprüche 14 bis 17, dadurch gekennzeichnet, daß auf dem Substrat eine reflektierende Schicht (91) gebildet ist, die mit dem zu lesenden Band in Berührung steht.

**20.** Lesekopf nach einem der Ansprüche 14 bis 19, dadurch gekennzeichnet, daß die mit dem zu lesenden Band in Berührung stehende Fläche wenigstens des Substratblocks abgerundet ist (Figuren 8 bis 11 und Figur 7a).

**21.** Lesekopf nach einem der Ansprüche 14 bis 20, dadurch gekennzeichnet, daß wenigstens der Substratblock aus einem Material besteht, dessen Brechungsindex höher als derjenige der Magnetschicht des zu lesenden Bandes ist.

**22.** Lesekopf nach Anspruch 21, dadurch gekennzeichnet, daß der Brechungsindex wenigstens 1,5 ist.

**23.** Lesekopf nach einem der vorhergehenden Ansprüche, dadurch gekennzeichnet, daß er eine Lichtquelle (22), eine erste Optik (23, 26), die einen Lichtstrahl auf einen Wandler (21) fokussiert, und eine zweite Optik (27, 28) enthält, die den von dem Wandler reflektierten Lichtstrahl auf einen optoelektronischen Sensor (29) fokussiert.

**24.** Lesekopf nach Anspruch 23, dadurch gekennzeichnet, daß die erste Optik eine Kollimationslinse (23), einen Polarisator und ein Halbwellenlängen-Plättchen (22) und eine Zylinderlinse (26) enthält.

**25.** Lesekopf nach Anspruch 23 oder 24, dadurch gekennzeichnet, daß die zweite Optik eine Fokussierungslinse (27) eine Phasenkompensationsvorrichtung und einen Analysator (28) enthält.

**26.** Lesekopf nach einem der vorhergehenden Ansprüche, dadurch gekennzeichnet, daß die magneto-optische Schicht (60, 71, 81, 93, 102) zur Oberfläche des zu lesenden Magnetbandes (65A, 76, 85, 107) in ihrer Berührungszone schräg ist.

**27.** Mehrspur-Lesekopf, dadurch gekennzeichnet, daß er mehrere Elementarköpfe (15.1, 15.2, oder 16.1, 16.2, ... oder 17.1, 17.2, ...) nach einem der vorhergehenden Ansprüche zum Lesen eines Magnetbandes mit Mehrspuraufzeichnung enthält.

**28.** Mehrspur-Lesekopf, dadurch gekennzeichnet, daß er mehrere Elementarköpfe (15.1, 15.2, oder 16.1, 16.2, ... oder 17.1, 17.2, ...) nach Anspruch 1 enthält und daß die allen Elementarköpfen gemeinsame dünne Schicht aus magnetischem Material mit Kerr-Effekt oder der Stapel der allen Elementarköpfen gemeinsamen drei Schichten keiner die Elementarköpfe abgrenzenden Ätzung unterworfen worden ist.

**29.** Verwendung eines Magnetkopfes nach Anspruch 28 zum Lesen eines Mehrspur-Magnetbandes, dadurch gekennzeichnet, daß die Breite jeder Spur größer als einige zehn Mikrometer ist.

**Claims**

**1.** Magneto-optic read head, the magnetic circuit of which comprises a part made of magnetic material having high permeability and a part made of material having magneto-optic properties, characterised in that the magnetic circuit is formed by a stack of plane layers comprising: a layer made of magnetic material having high magnetic permeability (11, 30, 39, 46) on which are formed at least one layer made of nonmagnetic material (10, 32, 38, 45 and 47, 56) and at least one thin layer made of Kerr effect magnetic material (11, 33, 39, 40, 46, 48, 57) which can be illuminated by a laser beam.

**2.** Read head according to Claim 1, characterised in that the Kerr effect layer has an easy-magnetisation axis in the plane of this layer and parallel to a magnetic tape to be read.

**3.** Read head according to Claim 1 or 2, characterised in that it effects the reading of longitudinal recordings.

**4.** Read head according to one of the preceding claims, characterised in that the thickness of the Kerr effect layer is such that the magnetic flux produced by the read tape brings it close to saturation.

**5.** Read head according to Claim 4, characterised in that the thickness of the Kerr effect layer lies between 100 and 2,000 Å approximately.

**6.** Read head according to one of the preceding claims, characterised in that the thickness of the layer of nonmagnetic material lies between 500 and 30,000 Å approximately.

**7.** Read head according to one of the preceding claims, characterised in that the layers of magnetic material are etched in order to delimit each elementary head (Figures 3a, 3b) from among other elementary heads forming the same multitrack head.

**8.** Read head according to one of the preceding claims, characterised in that a permanent magnetic field having the same direction as the head/tape contact line is applied thereto.

**9.** Read head according to one of the preceding claims, characterised in that that part of the stack of plane layers acting as magneto-optic transducer comprises the following layers arranged on top of one another in the following order:

a) the layer made of magnetic material having high magnetic permeability (30),

b) a metallic reflector (31),

c) a layer made of transparent nonmagnetic material (32),

d) a thin layer made of Kerr effect magnetic material (33).

10. Read head according to one of Claims 1 to 8, characterised in that that part of the stack of plane layers acting as magneto-optic transducer comprises two thin layers made of Kerr effect magnetic material (39, 40) which are separated by a layer made of transparent nonmagnetic material (38).

11. Read head according to one of Claims 1 to 8, characterised in that that part of the stack of plane layers acting as magneto-optic transducer comprises a first layer made of transparent nonmagnetic material (45) which is arranged between a reflector (44) and a first thin layer made of Kerr effect magnetic material (46), and a second layer made of transparent nonmagnetic material (47) arranged between the first Kerr effect thin magnetic layer (46) and a second thin layer made of Kerr effect magnetic material (48).

12. Read head according to one of Claims 1 to 8, characterised in that that part of the stack of plane layers acting as magneto-optic transducer comprises a thin layer made of Kerr effect magnetic material (57) arranged between a first layer made of transparent nonmagnetic material (56) having a first refractive index (n1) and a substrate (S) made of transparent nonmagnetic material having a second refractive index (n2) which is greater than the first refractive index (n1).

13. Read head according to one of Claims 1 to 11, characterised in that the transducer (60, 71, 81, 93, 102) is formed on a substrate block (61, 69, 80, 92, 101, 112) made of material transparent to the wavelength used.

14. Read head according to either of Claims 12 and 13, characterised in that it comprises an additional dielectric index-matching layer between the first magnetic layer and the substrate.

15. Read head according to Claim 14, characterised in that a light ray guide block (66, 98, 73, 104), likewise transparent to the wavelength used, is cemented onto the substrate block.

16. Read head according to Claim 14 or 15, characterised in that a reverse-piece for protecting the transducer (64, 82, 94, 103) is cemented onto the substrate block.

17. Read head according to Claim 16, characterised in that the reverse-piece is made of a material transparent to the wavelength used and serves in the guiding of the incident and/or reflected light ray.

18. Read head according to one of Claims 14 to 17, characterised in that a reflective layer (84) in contact with the tape to be read (85) is formed on the reverse-piece.

19. Read head according to one of Claims 14 to 17, characterised in that a reflective layer (91) in contact with the tape to be read is formed on the substrate.

20. Read head according to one of Claims 14 to 19, characterised in that the surface of contact of at least the substrate block with the tape to be read is rounded (Figures 8 to 11 and Figure 7a).

21. Read head according to one of Claims 14 to 20, characterised in that at least the substrate block is a material with refractive index higher than that of the magnetic layer of the tape to be read.

22. Read head according to Claim 21, characterised in the said index is at least 1.5.

23. Read head according to one of the preceding claims, characterised in that it comprises a light source (22), a first optical arrangement (23 to 26) focusing a light ray onto a transducer (21), and a second optical arrangement (27, 28) focusing the ray reflected by the transducer onto an optoelectronic sensor (29).

24. Read head according to Claim 23, characterised in that the first optical arrangement comprises a collimating lens (23), a polariser and a half-wavelength plate (22) and a cylindrical lens (26).

25. Read head according to Claim 23 or 24, characterised in that the second optical arrangement comprises a focusing lens (27), a phase compensating device, and an analyser (28).

26. Read head according to one of the preceding claims, characterised in that the magneto-optic layer (60, 71, 81, 93, 102) is oblique with respect to the surface of the magnetic tape to be read (65A, 76, 85, 107), in their region of contact.

27. Multitrack read head, characterised in that it comprises several elementary heads (15.1, 15.2, etc., or 16.1, 16.2, etc., or 17.1, 17.2, etc.), according to one of the preceding claims, in order to read a magnetic tape having multitrack recording.

**28.** Multitrack read head, characterised in that it comprises several elementary heads (15.1, 15.2, etc. or 16.1, 16.2, etc. or 17.1, 17.2, etc.) according to Claim 1 and in that the thin layer made of Kerr effect magnetic material common to all the elementary heads or the stack of the three layers common to all the elementary heads which have not undergone etching delimiting the elementary heads.

**29.** Use of a magnetic head according to Claim 28 for reading a multitrack magnetic tape, characterised in that the width of each track is greater than a few tens of micrometres.

FIG.1

FIG.2

# FIG.3 a

| Piste 1 | Piste 2 | Piste 3 | Piste 4 | . . . . |

15.1  15.2  15.3  15.4  . . .

# FIG.3b

| Piste 1 | Piste 2 | Piste 3 | Piste 4 | - - - - |

16.1  16.2  16.3  16.4  - - - -

# FIG.4

18.2  19.2  - - - - -

19.1

18.1

17.1  17.2  17.3  17.4  - - -

# FIG.5

# FIG.7b

FIG.6a

FIG.6b

FIG.6c

FIG.6d

FIG.7a

FIG.8

FIG.9

FIG.10

FIG. 11